# EUROPEAN PATENT APPLICATION

(11) **EP 4 664 782 A1**
(43) Date of publication of application: **17.12.2025**
(21) Application number: 24753609.7
(22) Date of filing: 06.02.2024
(51) Int. Cl.: H04B 7/06, H04B 7/0408, H04W 8/24, H04W 72/21, H04W 72/231, H04W 72/232, H04W 24/08, H04L 5/00

(54) **METHOD AND APPARATUS FOR BEAM FAILURE RECOVERY IN WIRELESS COMMUNICATION SYSTEM**

(30) Priority: 07.02.2023 KR 20230016401
(71) Applicant: LG Electronics Inc., Yeongdeungpo-gu Seoul 07336 (KR)
(72) Inventor: KANG, Jiwon, Seoul 06772 (KR); CHUNG, Jaehoon, Seoul 06772 (KR); GO, Seongwon, Seoul 06772 (KR)
(74) Representative: Plasseraud IP
(86) International application number: PCT/KR2024/001747
(87) International publication number: WO 2024/167284

(57) **Abstract**

A method performed by a terminal in a wireless communication system according to one embodiment of the present disclosure comprises the steps of determining a plurality of Beam Failure Detection (BFD)-Reference Signal (RS) sets and determining a beam failure based on each of the plurality of BFD-RS sets. Each BFD-RS set includes RS indexes based on Control REsource SETs (CORESETs) related to one of a plurality of CORESET pool indexes. The RS indexes are determined based on at least one of i) a unified Transmission Configuration Indicator (TCI) state related to the CORESETs from among a plurality of unified TCI states, ii) a TCI state related to a specific CORESET from among the CORESETs, and/or iii) an RS mapped to a BFD-RS set ID.

## Description

### [TECHNICAL FIELD]

The present disclosure relates to a method and apparatus for beam failure recovery in a wireless communication system.

### [BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

For TRP-specific Beam Failure Recovery (BFR), a plurality of Beam Failure Detection (BFD)-Reference Signal (RS) sets are utilized. The plurality of BFD-RS sets may include a BFD-RS set(s) configured by the base station and/or a BFD-RS set(s) determined by the terminal. For example, (when part of the plurality of BFD-RS sets are not configured by the base station or when the plurality of BFD-RS sets are not configured) the terminal may determine a BFD-RS set so that the BFD-RS set includes RS indexes based on CORESETs related to one CORESET pool index.

A unified Transmission Configuration Indicator (TCI) state integrated into the CORESET may be applied. However, since the unified TCI state activates/indicates only one beam at a time, the unified TCI state has limitations in being used for mTRP transmission and reception techniques (e.g., TRP-specific beam failure recovery). In the Rel-18, standardization work is underway to extend unified TCI-based beam management so that two beams are managed separately for downlink (DL) and uplink (UL). In other words, the number of DL TCIs (M value) and the number of UL TCIs (N value) that are simultaneously activated/indicated/used/updated by the Rel-18 unified TCI have each been increased to two (M = 2, N = 2).

For example, if the followUnifiedTCI-State parameter is set to "enable" for a CORESET, the indicated unified TCI state (DL-only TCI or joint TCI) is applied for PDCCH reception in the corresponding CORESET. For example, if the applyIndicatedTCI-State parameter for a CORESET is set to "first," "second," or "both," at least one of the two indicated unified TCI states (DL-only TCI and joint TCI) is applied for PDCCH reception in the corresponding CORESET. For example, when the applyIndicatedTCI-State parameter for a CORESET is set to "none," the two indicated unified TCI states (DL-only TCI and joint TCI) may not be applied for PDCCH reception in the corresponding CORESET.

### [DISCLOSURE]

### [TECHNICAL PROBLEM]

As described above, in the Rel-18, two unified TCI states may be supported. At this time, among the CORESETs related to the BFD-RS set, there may exist one or more CORESETs to which the unified TCI state is not applied. In other words, among the CORESETs related to the BFD-RS set, there may exist one or more CORESETs to which neither of the two unified TCI states is applied. For example, among CORESETs related to a specific CC (serving cell)/specific BWP while the unified TCI state(s) is activated in Component Carriers (CCs) (serving cells)/BWPs, there may exist a CORESET(s) to which the unified TCI state is not applied (e.g., a CORESET in which the followUnifiedTCI-State parameter is not configured or a CORESET in which the applyIndicatedTCI-State parameter is set to "none").

As described above, when the CORESETs for determining the BFD-RS set include both CORESET(s) to which the unified TCI state is applied and CORESET(s) to which the unified TCI state is not applied, it may become ambiguous which CORESET(s) should be used for determining the BFD-RS set.

For example, it may become ambiguous whether the BFD-RS set should be determined based on the CORESET(s) to which the unified TCI state is applied or based on the CORESET(s) to which the unified TCI state is not applied.

In addition, when the number of RSs to be included in the BFD-RS set exceeds a set maximum number (e.g., *N*_{BFD}), the BFD-RS set is determined based on the CORESET(s) corresponding to the search space sets in ascending order of monitoring periodicity. If there are two or more CORESETs based on the same monitoring periodicity, the order of the CORESETs (i.e., the RSs of the CORESET(s) to be preferentially included) is determined based on a descending order of CORESET IDs.

At this time, it is ambiguous whether the monitoring periodicity should be based on the CORESET(s) to which the unified TCI state is applied or based on the CORESET(s) to which the unified TCI state is not applied.

Also, it is ambiguous whether the CORESET ID should be based on the CORESET(s) to which the unified TCI state is applied or based on the CORESET(s) to which the unified TCI state is not applied.

An object of the present disclosure is to provide a method for solving the above-described problems.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [TECHNICAL SOLUTION]

A method performed by a terminal in a wireless communication system according to one embodiment of the present disclosure comprises the steps of determining a plurality of Beam Failure Detection (BFD)-Reference Signal (RS) sets and determining a beam failure based on each of the plurality of BFD-RS sets.

Each BFD-RS set includes RS indexes based on Control REsource SETs (CORESETs) related to one of a plurality of CORESET pool indexes.

The RS indexes are determined based on at least one of i) a unified Transmission Configuration Indicator (TCI) state related to the CORESETs from among a plurality of unified TCI states, ii) a TCI state related to a specific CORESET from among the CORESETs, and/or iii) an RS mapped to a BFD-RS set ID.

The specific CORESET may be determined based on at least one of i) whether the unified TCI state is applied, ii) a Physical Downlink Control Channel (PDCCH) monitoring periodicity, and/or iii) the CORESET index.

The TCI state related to the specific CORESET may be the TCI state of a CORESET to which the unified TCI state is not applied.

The TCI state related to the specific CORESET may be the TCI state of a CORESET configured for a CORESET to which the unified TCI state is not applied.

The RS mapped to the BFD-RS set ID may be based on an RS mapped to an index related to the unified TCI state.

The specific CORESET may include at least one CORESET determined based on an ascending order of the PDCCH monitoring periodicity.

The ascending order may be determined based on i) a minimum PDCCH monitoring periodicity based on all CORESETs to which the unified TCI state is applied among the CORESETs and ii) a PDCCH monitoring periodicity based on each of one or more CORESETs to which the unified TCI state is not applied among the CORESETs.

The specific CORESET may include at least one CORESET determined based on a descending order of CORESET indexes for the same PDCCH monitoring periodicity.

The descending order may be determined based on i) the CORESETs to which the unified TCI state is applied among the CORESETs, or ii) one or more CORESETs to which the unified TCI state is not applied among the CORESETs.

The CORESETs may be configured to include only CORESETs to which the unified TCI state is applied.

Based on the CORESETs including one or more CORESETs to which the unified TCI state is not applied, the number of active TCI states based on the CORESETs may be smaller than or equal to an indicated number of RS indexes per BFD-RS set.

The method may further include transmitting a Physical Uplink Control Channel (PUCCH) related to the beam failure detection.

A terminal operating in a wireless communication system according to another embodiment of the present disclosure comprises one or more transceivers, one or more processors, and one or more memories connected to the one or more processors and storing instructions.

The instructions, when executed by the one or more processors, configure the one or more processors to perform all steps of any one of the methods.

An apparatus according to yet another embodiment of the present disclosure comprises one or more memories and one or more processors functionally connected to the one or more memories.

The one or more memories store instructions that, when executed by the one or more processors, configure the one or more processors to perform all steps of any one of the methods.

One or more non-transitory computer-readable medium according to still another embodiment of the present disclosure stores instructions. The instructions executable by one or more processors configure the one or more processors to perform all steps of any one of the methods.

A method performed by a base station in a wireless communication system according to yet still another embodiment of the present disclosure comprises receiving a Physical Uplink Control CHannel (PUCCH) related to beam failure detection.

The beam failure is detected based on each of a plurality of BFD-RS sets.

Each BFD-RS set includes RS indexes based on Control REsource SETs (CORESETs) related to one of a plurality of CORESET pool indexes.

The RS indexes are determined based on at least one of i) a unified Transmission Configuration Indicator (TCI) state related to the CORESETs from among a plurality of unified TCI states, ii) a TCI state related to a specific CORESET from among the CORESETs, and/or iii) an RS mapped to a BFD-RS set ID.

A base station operating in a wireless communication system according to still further embodiment of the present disclosure comprises one or more transceivers, one or more processors, and one or more memories connected to the one or more processors and storing instructions.

The instructions, when executed by the one or more processors, configure the one or more processors to perform all steps of the method.

### [ADVANTAGEOUS EFFECTS]

As two unified TCI states are supported, ambiguity may arise in the configuration (RS indexes) of the BFD-RS set determined by the terminal. According to an embodiment of the present disclosure, ambiguity in the configuration (RS indexes) of the BFD-RS set may be resolved. Also, TRP-specific beam failure recovery may be performed while supporting CORESET(s) that do not follow the unified TCI state.

When the number of RSs to be included in the BFD-RS set exceeds a set maximum number, it may be ambiguous which CORESET (a CORESET to which the unified TCI state is applied or a CORESET to which the unified TCI state is not applied) should be used as a basis for determining the monitoring periodicity and/or CORESET ID to be used for determining the BFD-RS set. According to an embodiment of the present disclosure, specific criteria capable of resolving ambiguity related to the monitoring periodicity and/or CORESET ID are defined and utilized. Accordingly, the aforementioned ambiguity that may arise when additional operations are performed due to the number of RSs for determining the BFD-RS set (exceeding the maximum number) may be resolved.

Effects that could be achieved with the present disclosure are not limited to those that have been described hereinabove merely by way of example, and other effects and advantages of the present disclosure will be more clearly understood from the following description by a person skilled in the art to which the present disclosure pertains.

### [BRIEF DESCRIPTION OF THE DRAWING]

FIG. 1 illustrates an example of beamforming using SSB and CSI-RS.
FIG. 2 illustrates an example of a UL BM procedure using an SRS.
FIG. 3 illustrates a signaling procedure according to an embodiment of the present disclosure.
FIG. 4 is a flow diagram illustrating a method performed by a terminal according to one embodiment of the present disclosure.
FIG. 5 is a flow diagram illustrating a method performed by a base station according to another embodiment of the present disclosure.
FIG. 6 illustrates the structure of a first apparatus and a second apparatus according to an embodiment of the present disclosure.

### [DETAILED DESCRIPTION]

Hereinafter, preferred embodiments of the disclosure are described in detail with reference to the accompanying drawings. The following detailed description taken in conjunction with the accompanying drawings is intended for describing example embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machineto-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

### Beam Management (BM)

A BM procedure as layer 1 (L1)/layer 2 (L2) procedures for acquiring and maintaining a set of base station (e.g., gNB, TRP, etc.) and/or terminal (e.g., UE) beams which may be used for downlink (DL) and uplink (UL) transmission/reception may include the following procedures and terms.
- Beam measurement: Operation of measuring characteristics of a beam forming signal received by the eNB or UE.
- Beam determination: Operation of selecting a transmit (Tx) beam/receive (Rx) beam of the eNB or UE by the eNB or UE.
- Beam sweeping: Operation of covering a spatial region using the transmit and/or receive beam for a time interval by a predetermined scheme.
- Beam report: Operation in which the UE reports information of a beamformed signal based on beam measurement.

The BM procedure may be divided into (1) a DL BM procedure using a synchronization signal (SS)/physical broadcast channel (PBCH) Block or CSI-RS and (2) a UL BM procedure using a sounding reference signal (SRS). Further, each BM procedure may include Tx beam sweeping for determining the Tx beam and Rx beam sweeping for determining the Rx beam.

### Downlink Beam Management (DL BM)

The DL BM procedure may include (1) transmission of beamformed DL reference signals (RSs) (e.g., CIS-RS or SS Block (SSB)) of the eNB and (2) beam reporting of the UE.

Here, the beam reporting a preferred DL RS identifier (ID)(s) and L1-Reference Signal Received Power (RSRP).

The DL RS ID may be an SSB Resource Indicator (SSBRI) or a CSI-RS Resource Indicator (CRI).

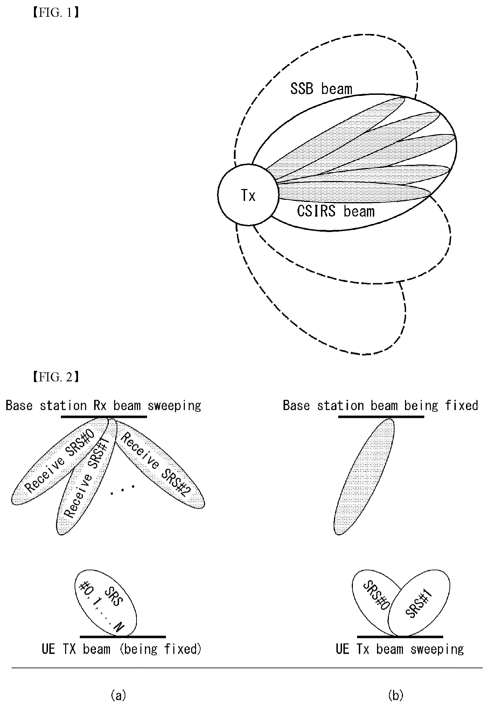

FIG. 1 illustrates an example of beamforming using a SSB and a CSI-RS.

As illustrated in FIG. 1, a SSB beam and a CSI-RS beam may be used for beam measurement. A measurement metric is L1-RSRP per resource/block. The SSB may be used for coarse beam measurement, and the CSI-RS may be used for fine beam measurement. The SSB may be used for both Tx beam sweeping and Rx beam sweeping. The Rx beam sweeping using the SSB may be performed while the UE changes Rx beam for the same SSBRI across multiple SSB bursts. One SS burst includes one or more SSBs, and one SS burst set includes one or more SSB bursts.

### DL BM related beam indication

A UE may be RRC-configured with a list of up to M candidate transmission configuration indication (TCI) states at least for the purpose of quasi co-location (QCL) indication, where M may be 64.

Each TCI state may be configured with one RS set. Each ID of DL RS at least for the purpose of spatial QCL (QCL Type D) in an RS set may refer to one of DL RS types such as SSB, P-CSI RS, SP-CSI RS, A-CSI RS, etc.

Table 1 represents an example of TCI-State IE.

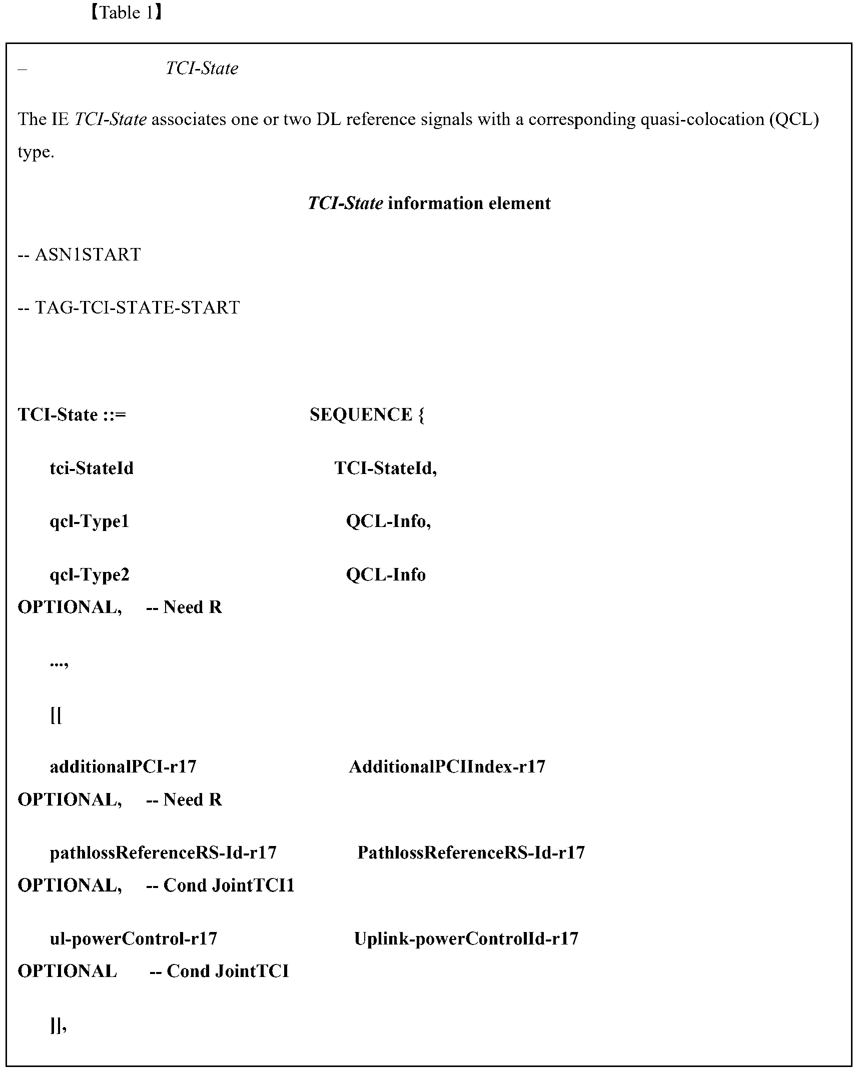

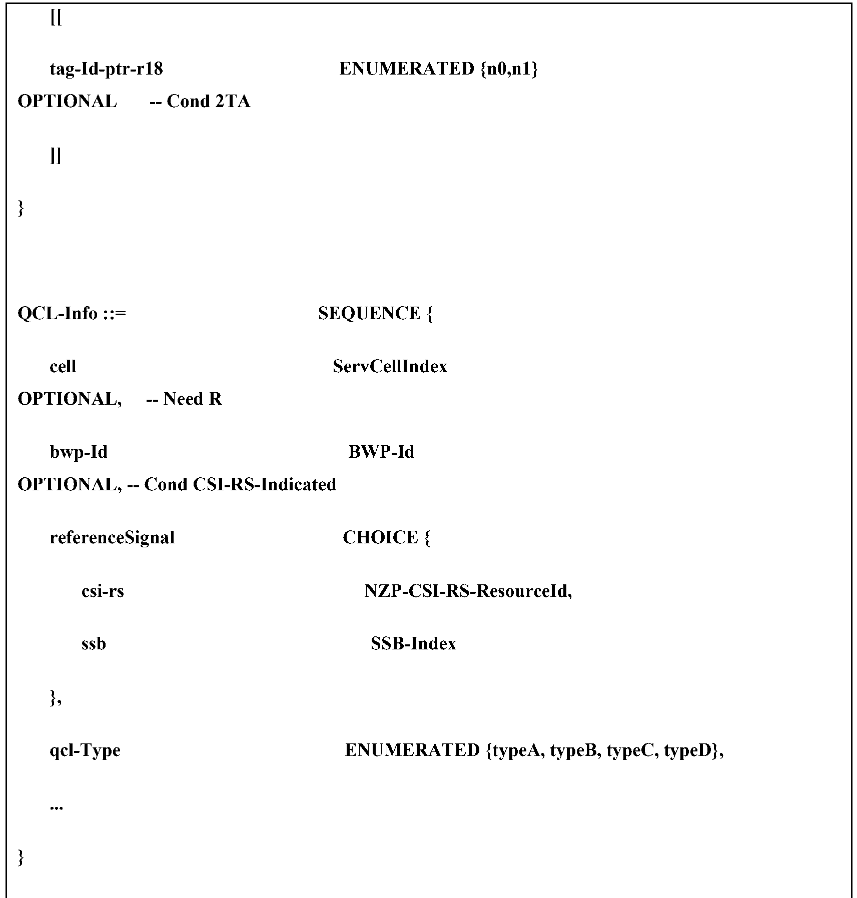

### UL BM procedure

In the same manner as the DL BM, the UL BM procedure may be divided into a UE's Tx beam sweeping and a base station's Rx beam sweeping.

FIG. 2 illustrates an example of a UL BM procedure using an SRS.

More specifically, (a) of FIG. 2 illustrates an Rx beam determination procedure of a base station, and (a) of FIG. 2 illustrates a Tx beam sweeping procedure of a UE.

### BM enhancement in NR Rel-16

In the 3GPP NR Rel-15, the standardized DL/UL beam indication is designed to separately indicate a beam for each DL/UL channel/RS resource to ensure beam indication flexibility, and the indication method is separately designed for each channel/RS.

This design principle results in a problem in which, for a plurality of UEs communicating with the base station using a single beam, the signaling overhead becomes large and beam switching latency becomes high, since the base station has to instruct the UE to switch beams separately for each channel/RS resource to change the serving beam. In addition to UL beam switching, UL power control-related parameters, especially the pathloss RS (PL RS), has to be changed for each UL channel/RS, which leads to signaling overhead and latency. To address the drawbacks above, five features have been introduced in the Rel-16. Table 2 below illustrates the five features.

**[Table 2]**

| |
|---|
| 1. Default spatial relation/PL RS |
| Firstly, since many UEs in NR FR2 deployment use a single analog beam at a time and meet the beam correspondence, this enables unifying DL and UL beam indication, meaning that a DL RS resource can be commonly used as a source RS for both DL beam and UL beam indication. It is also possible to unify the source DL RS for DL/UL beam indication with the pathloss reference RS, i.e. the RS used for pathloss estimation at UE for UL power control, because gNodeB would use a same beam direction for both transmission of the DL RS and reception of the UL signal. Based on this motivation, the feature so called 'default spatial relation/pathloss reference RS' was introduced in Rel-16. In this mode of operation, spatial relation RS and pathloss reference RS do not need to be explicitly indicated from gNodeB to UE, and UE uses one source RS for PDCCH/PDSCH beam as for the spatial relation RS and the pathloss reference RS. Therefore, gNodeB only needs to update the DL source RS whenever needed to update the serving Tx/Rx beam for the UE. Above operation can be enabled for dedicated PUCCH, SRS, and/or PUSCH scheduled by DCI format 0_0 by respective RRC enablers. |
| 2. Multi-CC simultaneous TCI/spatial relation update |
| Secondly for multi-carrier operation, it is common that antenna/RF components are shared for same or multiple bands at both gNodeB and UE sides. For example, multi-band antenna is a very common tool for UE implementation to minimize size and cost of the communication modules. This means that a beam can be commonly used for transmission and/or reception across multiple component carriers (CCs) in one or multiple bands. Based on this motivation, BM signaling can be saved via switching beam indication from per CC basis into per CC group basis. Therefore, in Rel-16, it was introduced that the source RS for DL/UL beam indication can be updated simultaneously across multiple CCs. For this operation, one or two CC lists can be configured to UE by higher layer for DL and UL, respectively. Once source RS ID(s) are activated for DL beam indication, the RS(s) with the same RS ID(s) are also activated in other CC(s) in the same CC list. Similarly, once a spatial relation RS is activated for an SRS resource in a CC, the same RS is activated as spatial relation RS for the SRS resource(s) with the same resource ID in other CC(s) in the same CC list. |
| 3. PUCCH resource group based spatial relation update |
| Third, in Rel. 15, the spatial relation RS for PUCCH can be activated/deactivated per resource level. Since NR allows up to 128 PUCCH resources per UE, this per-resource based signaling would require a large amount of beam indication signaling for high/mid mobility UE. Due to the fact that one or a few beams are typically used |
| across all PUCCH resources, e.g. one common beam per UE or per UE panel, PUCCH resource group based spatial relation update mechanism was introduced in Rel-16. For a UE, up to four PUCCH resource groups can be configured by RRC per BWP, and one MAC CE can activate/deactivate a common spatial relation RS for all the PUCCH resources in the same resource group. |
| 4. MAC CE based spatial relation indication for aperiodic/semi-persistent SRS |
| Fourth, SRS is an important tool for UL link adaptation and for DL channel estimation using DL-UL channel reciprocity. In Rel.15, spatial relation RS for aperiodic SRS was configured by RRC only, meaning that a large number of SRS resources with different spatial relation RSs need to be configured by RRC to support high mobility UE, for gNodeB to dynamically select and trigger one SRS resource among them according to UE mobility. To alleviate this burden, MAC CE based spatial relation indication for aperiodic/semi-persistent SRS |
| was introduced in Rel-16. Using this MAC CE, spatial relation RSs for a set of SRS resources can be updated together. |
| *5.* MAC CE based PL RS update for aperiodic/semi-persistent SRS and PUSCH |
| Fifth, in Rel. 15, pathloss reference RSs for UL power control for PUSCH and SRS could only be configured by RRC and the maximum configurable number of pathloss RSs was limited to a small number, which was four. This could lead to frequent RRC reconfiguration considering sharply beamformed RS transmission and high UE mobility in FR2. To address this issue, MAC CE based pathloss reference RS update for aperiodic/semi-persistent SRS and PUSCH was introduced in Rel-16. The maximum configurable number of pathloss reference RSs by RRC was increased to 64, and the new MAC CE can activate up to four pathloss reference RSs among them. Two MAC CEs were introduced for SRS and PUSCH, respectively. |

### BM enhancements in NR Rel-17

The Rel-17 provides the standard channel/RS-integrated beam configuration/indication method. In NR, a DL beam is indicated through a Transmit Configuration Indicator (TCI), which is referred to as a unified TCI state. While a conventional TCI state is configured/indicated separately for each DL RS/channel, the unified TCI state is characterized by its integrated configuration/indication.
- Joint DL/UL TCI configuration/indication mode: A DL RS configured/indicated by a joint TCI state is applied not only as a QCL Type-D source RS for DL channels/RSs but also as a spatial relation RS (and PL RS) for UL channels/RSs. In other words, when a joint TCI state is updated, the beam RS (and PL RS) for the DL channels/RSs and the UL channels/RSs are changed together.
- Separate DL and UL TCI configuration/indication mode: The QCL Type-D source RS for DL channels/RSs is configured/indicated as a DL TCI state in an integrated manner, and the spatial relation RS (and PL RS) for UL channels/RSs is configured/indicated as a UL TCI state in an integrated manner. Here, the DL TCI state and the UL TCI state are configured/indicated separately.

The DL/UL/joint TCI state is to be indicated/updated via MAC-CE and/or DCI. More specifically, one or more TCI states among the plurality of TCI states configured via RRC (referred to as a TCI state pool) are activated using MAC-CE. If a plurality of TCI states are activated using MAC-CE, one of the activated TCI states is indicated by DCI.

The DCI indication is to be supported through downlink DCI format (DCI1-1/1-2) that supports the TCI field and is expected to be supported not only for the case in which PDSCH scheduling is accompanied but also for the case in which the PDSCH scheduling is not supported. In the latter case, since PDSCH scheduling is omitted (similar to the DCI-based semipersistent scheduling (SPS) release method), ACK transmission by the UE for the corresponding DCI is expected to be supported.

### Multi-Transmission/Reception Point (TRP)-related operation

From the perspective of Downlink Control Information (DCI) transmission, the Multiple TRP (M-TRP) transmission scheme may be categorized into i) Multiple DCI (M-DCI)-based M-TRP transmission, in which each TRP transmits a different DCI, and ii) Single DCI (S-DCI)-based M-TRP transmission, in which a single TRP transmits the DCI.

First, the single DCI-based M-TRP scheme is described. M-TRP transmits a common PDSCH in a collaborative manner, and each TRP participating in the collaborative transmission spatially divides the PDSCH into different layers (i.e., different DMRS ports) for transmission. M TCI states are indicated through the TCI field within the DCI (where M = 2 in the case of cooperative transmission involving two TRPs), and the QCL RS and type are determined using different M TCI states for each of the M DMRS port groups. Also, DMRS port information may be indicated using a new DMRS table.

Second, the multiple DCI-based M-TRP scheme is described. M-TRP each transmits a different DCI and a different PDSCH, and the respective PDSCHs are transmitted by being overlapped (partially or fully) across the frequency time resources. The corresponding PDSCHs are scrambled using different scrambling IDs, and the respective DCIs may be transmitted through CORESETs belonging to the respective CORESET groups. When a plurality of scrambling IDs are configured in a single serving cell, or when two or more CORESET groups are configured, it indicates that the UE is receiving data through a multiple DCI-based M-TRP operation.

The CORESET group ID (CORESET pool index) described/referred to in the present disclosure may refer to an index or identification information (e.g., ID) used to distinguish CORESETs for each TRP/panel. For example, a higher-layer parameter, ControlResourceSet Information Element (IE), is used to configure a time/frequency control resource set (CORESET). The CORESET, for example, may be related to the detection and reception of downlink control information. A CORESET group may correspond to a CORESET pool, and the CORESET group ID may correspond to a CORESET pool index (e.g., CORESETPoolIndex). The ControlResourceSet (i.e., CORESET) may be configured through higher-layer signaling (e.g., RRC).

The UE may recognize different TRPs as different TCI states, and the UE's receiving/transmitting data/DCI/UCI using TCI state 1 indicates that the UE has received/transmitted the data/DCI/UCI from/to TRP 1.

Table 3 below illustrates an example of ControlResourceSet IE.

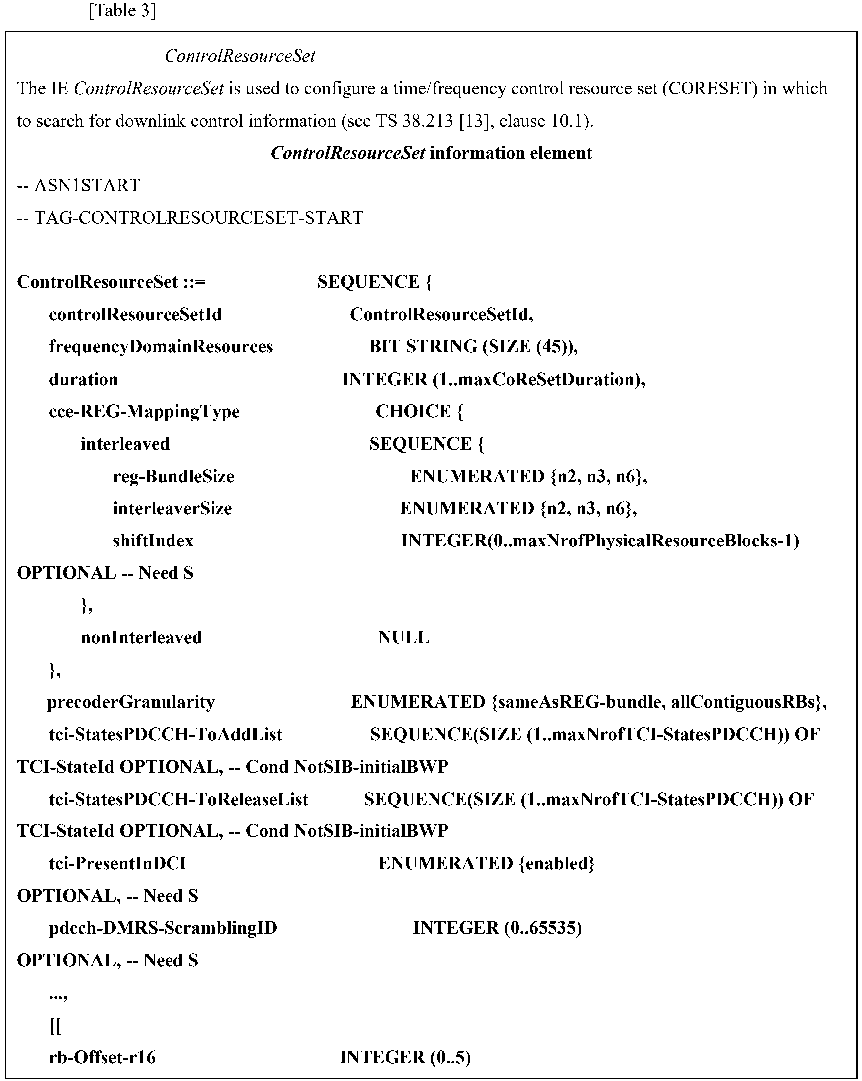

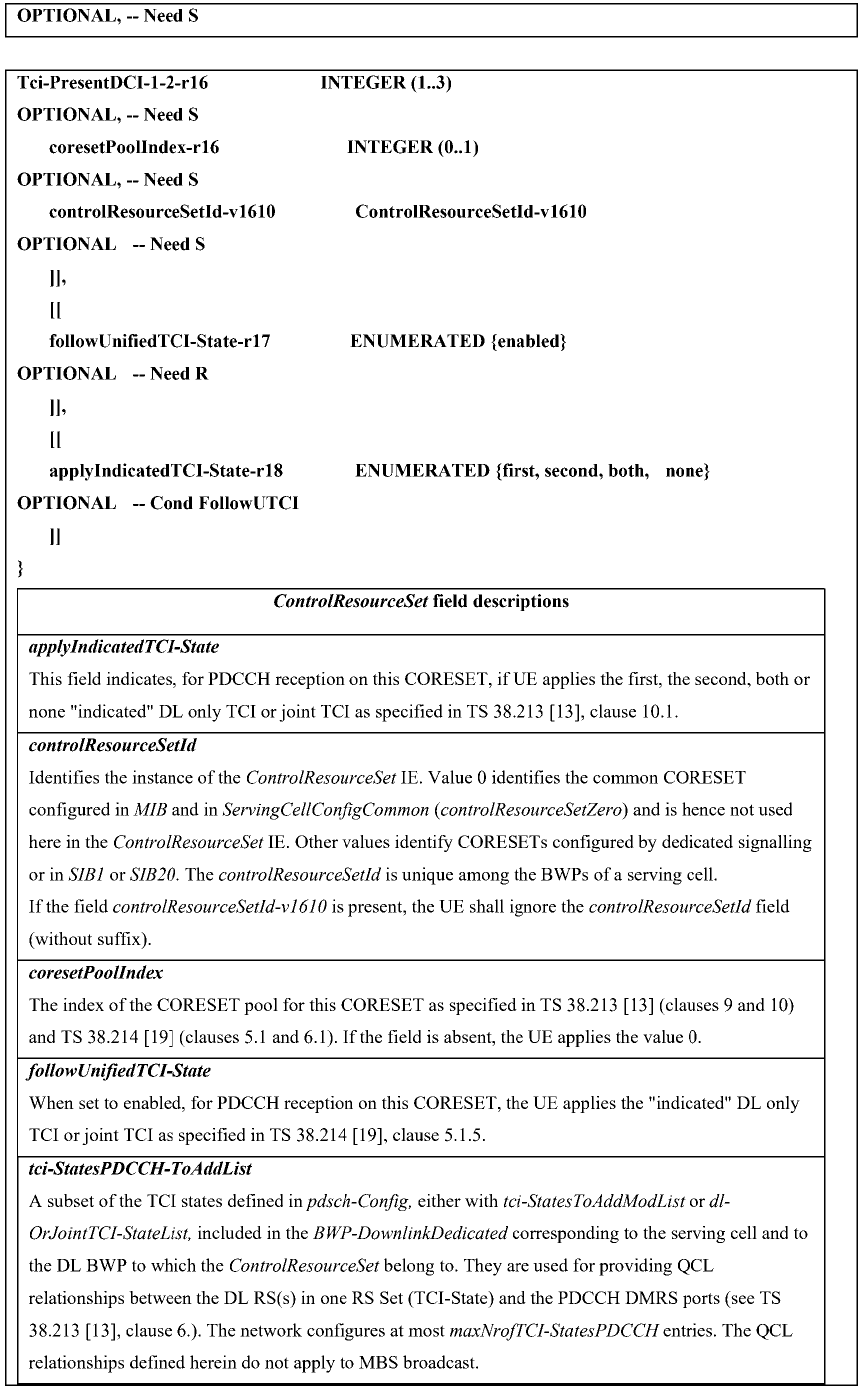

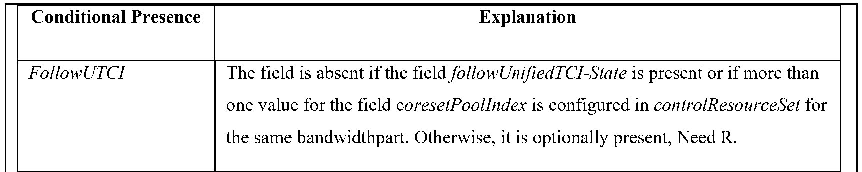

### Beam failure recovery (in 3GPP NR Rel-15)

The occurrence of a beam failure event may be determined by the UE based on the reception quality of downlink reference signals (RS), and a report message or a beam failure recovery request (BFRQ) message has to be transmitted from the UE. Upon receiving the message, the base station may perform beam recovery through various procedures such as beam RS transmission and beam reporting request. The series of beam recovery procedures above is referred to as beam failure recovery (BFR). In the Rel-15 NR, the BFR procedure has been standardized for PCell or PScell (which are collectively referred to as a special cell (SpCell)) in which contention-based PRACH resources are always available. The corresponding procedure operates within the serving cell and consists of the UE's beam failure detection (BFD) procedure, the BFRQ procedure, and the procedure in which the UE monitors the response of the base station to the BFRQ, as described below.

### Beam Failure Detection (BFD)

When the quality of all PDCCH beams falls below a predefined quality threshold (Q_out), it is counted as one beam failure instance (here, the quality is based on a hypothetical block error rate (BLER), which represents the probability of demodulation failure for control information assuming that the control information has been transmitted via the corresponding PDCCH).

Here, "all PDCCH beams" refers to a case in which, when one or more search spaces for monitoring the PDCCH are configured for the UE, and each search space has a different beam configuration, the quality of all the beams may fall below the BLER threshold. The following two methods are supported as criteria for determining the BFD RS by the UE.

[Implicit configuration of BFD RSs] Each search space is assigned a CORESET (Control Resource Set) ID, which defines the resource region where PDCCH may be transmitted (refer to TS 38.213, TS 38.214, TS 38.331); for each CORESET ID, RS information (e.g., CSI-RS resource ID, SSB ID) that is quasi co-located (QCL) with respect to the spatial RX parameters may be indicated/configured (in the NR standard, the QCL RS is indicated/configured via Transmit Configuration Information (TCI) indication). Here, the QCL RS with respect to the spatial RX parameters (i.e., QCL Type D in TS 38.214) indicates a method by which the base station informs the UE that the beams used to receive spatially QCLed RSs should be used without a modification for receiving the PDCCH DMRS. As a result, from the perspective of the base station, the QCL RS with respect to the spatial RX parameters indicates a method of informing the UE that the same transmission beam or a similar transmission beam (e.g., beams having the same or similar direction but different beam widths) is applied for transmission across spatially QCLed antenna ports.

[Explicit configuration of BFD RSs] The base station may explicitly configure the beam RS(s) for the purpose of beam failure detection, in which case the corresponding beam RS(s) correspond to the "all PDCCH beams."

Whenever an event occurs in which the hypothetical BLER measured based on the BFD RS(s) in the UE's physical layer deteriorates beyond a predetermined threshold, a Beam Failure Instance (BFI) is reported to the MAC sublayer; in the UE's MAC sublayer, if the BFI occurs a predetermined number of times (beamFailureInstanceMaxCount) within a predetermined period (BFD timer), it is determined that a beam failure has occurred, and the related RACH procedure is initiated.

Table 4 below illustrates an example of beam failure detection and recovery operations.

**[Table 4]**

| | | | | |
|---|---|---|---|---|
| 5.17 Beam Failure Detection and Recovery procedure | | | | |
| The MAC entity may be configured by RRC per Serving Cell or per BFD-RS set with a beam failure recovery procedure which is used for indicating to the serving gNB of a new SSB or CSI-RS when beam failure is detected on the serving SSB(s)/CSI-RS(s). Beam failure is detected by counting beam failure instance indication from the lower | | | | |
| layers to the MAC entity. If *beamFailureRecoveryConfig* is reconfigured by upper layers during an ongoing Random Access procedure for beam failure recovery for SpCell, the MAC entity shall stop the ongoing Random Access procedure and initiate a Random Access procedure using the new configuration. The Serving Cell is configured with two BFD-RS sets if and only if *failureDetectionSet1* and *failureDetectionSet2* are configured for active DL BWP of the Serving Cell. When the SCG is deactivated, the UE performs beam failure detection on PSCell if *bfd-and-RLM* is set to *true.* the the | | | | |
| RRC configures the following parameters in the *beamFailureRecoveryConfig, beamFailureRecoverySpCellConfig, beamFailureRecoverySCellConfig* and the *radioLinkMonitoringConfig* for the Beam Failure Detection and Recovery procedure: | | | | |
| | | | | - *beamFailurelnstanceMaxCount* for the beam failure detection (per Serving Cell or per BFD-RS set of Serving Cell configured with two BFD-RS sets); |
| | | | | - *beamFailureDetectionTimer* for the beam failure detection (per Serving Cell or per BFD-RS set of Serving Cell configured with two BFD-RS sets); |
| | | | | - *beamFailureRecoveryTimer* for the beam failure recovery procedure for SpCell; |
| | | | | - *rsrp-ThresholdSSB:* an RSRP threshold for the SpCell beam failure recovery; |
| | | | | - *rsrp-ThresholdBFR:* an RSRP threshold for the SCell beam failure recovery or for the beam failure recovery of BFD-RS set of Serving Cell; |
| | | | | - *powerRampingStep*: *powerRampingStep* for the SpCell beam failure recovery; |
| | | | | - *powerRampingStepHighPriority: powerRampingStepHighPriority* for the SpCell beam failure recovery; |
| | | | | - *preambleReceivedTargetPower: preambleReceivedTargetPower* for the SpCell beam failure recovery; |
| | | | | - *preambleTransMax: preambleTransMax* for the SpCell beam failure recovery; |
| | | | | - *scalingFactorBI: scalingFactorBI* for the SpCell beam failure recovery; |
| | | | | - *ssb-perRACH-Occasion: ssb-perRACH-Occasion* for the SpCell beam failure recovery using contention-free Random Access Resources; |
| | | | | - *ra-ResponseWindow:* the time window to monitor response(s) for the SpCell beam failure recovery using contention-free Random Access Resources; |
| | | | | - *prach-ConfigurationIndex: prach-ConfigurationIndex* for the SpCell beam failure recovery using contention-free Random Access Resources; |
| | | | | - *ra-ssb-OccasionMaskIndex: ra-ssb-OccasionMaskIndex* for the SpCell beam failure recovery using contention-free Random Access Resources; |
| | | | | - *ra-OccasionList: ra-OccasionList* for the SpCell beam failure recovery using contention-free Random Access Resources; |
| | | | | - candidateBeamRSList: list of candidate beams for SpCell beam failure recovery; |
| | - candidateBeamRS-List-r16: list of candidate beams for SCell beam failure recovery or list of candidate beams for beam failure recovery of a Serving Cell for BFD-RS set one; | | | |
| | - *candidateBeamRS-List2-r17:* list of candidate beams for beam failure recovery of a Serving Cell for BFD-RS set two. | | | |
| The following UE variables are used for the beam failure detection procedure: | | | | |
| | *- BFI_COUNTER* (per Serving Cell or per BFD-RS set of Serving Cell configured with two BFD-RS sets): counter for beam failure instance indication which is initially set to 0. | | | |
| The MAC entity shall for each Serving Cell configured for beam failure detection: | | | | |
| | 1> if the Serving Cell is configured with two BFD-RS sets: | | | |
| | | 2> if beam failure instance indication for a BFD-RS set has been received from lower layers: | | |
| | | | 3> start or restart the *beamFailureDetectionTimer* of the BFD-RS set; | |
| | | | 3> increment *BFI_COUNTER* of the BFD-RS set by 1; | |
| | | | 3> if *BFI_COUNTER* of the BFD-RS set >= *beamFailureInstanceMaxCount:* | |
| | | | | 4> trigger a BFR for this BFD-RS set of the Serving Cell; |
| | | 2> if BFR is triggered for both BFD-RS sets of the SpCell and the Beam Failure Recovery procedure is not successfully completed for any of the BFD-RS sets: | | |
| | | | 3> initiate a Random Access procedure (see clause 5.1) on the SpCell; | |
| | | 2> if the Serving Cell is SpCell and the Random Access procedure initiated for beam failure recovery of both BFD-RS sets of SpCell is successfully completed (see clause 5.1): | | |
| | | | 3> set *BFI_COUNTER* of each BFD-RS set of SpCell to 0. | |
| | | | 3> consider the Beam Failure Recovery procedure successfully completed. | |
| | | 2> if the *beamFailureDetectionTimer* of this BFD-RS set expires; or | | |
| | | 2> if *beamFailureDetectionTimer, beamFailureInstanceMaxCount,* or any of the reference signals used for beam failure detection is reconfigured by upper layers or by the BFD-RS Indication MAC CE associated with a BFD-RS set of the Serving Cell; or | | |
| | | 2> if the reference signal(s) associated with a BFD-RS set of the Serving Cell used for beam failure detection is changed: | | |
| | | | 3> set BFI COUNTER of the BFD-RS set to 0. | |
| | | 2> if a PDCCH addressed to C-RNTI indicating uplink grant for a new transmission is received for the HARQ process used for the transmission of the Enhanced BFR MAC CE or Truncated Enhanced BFR MAC CE which contains beam failure recovery information of this BFD-RS set of the Serving Cell: | | |
| | | | | 3> set *BFI_COUNTER* of the BFD-RS set to 0; |
| | | | | 3> consider the Beam Failure Recovery procedure successfully completed for this BFD-RS set and cancel all the triggered BFRs of this BFD-RS set of the Serving Cell. |
| | | | 2> if the Serving Cell is SCell and the SCell is deactivated as specified in clause 5.9: | |
| | | | | 3> set *BFI_COUNTER* of each BFD-RS set of SCell to 0; |
| | | | | 3> consider the Beam Failure Recovery procedure successfully completed and cancel all the triggered BFRs of all BFD-RS sets of the Serving Cell. |
| | | | | (...) |
| | | 1> if the Beam Failure Recovery procedure determines that at least one BFR for any BFD-RS set has been triggered and not cancelled for an SCell for which evaluation of the candidate beams according to the requirements as specified in TS 38.133 [11] has been completed; or | | |
| | | 1> if the Beam Failure Recovery procedure determines that at least one BFR for only one BFD-RS set has been triggered and not cancelled for an SpCell for which evaluation of the candidate beams according to the requirements as specified in TS 38.133 [11] has been completed; or | | |
| | | 1> if the Beam Failure Recovery procedure determines that at least one BFR has been triggered and not cancelled for an SCell for which evaluation of the candidate beams according to the requirements as specified in TS 38.133 [11] has been completed and if at least one Serving Cell of this MAC entity is configured with two BFD-RS sets: | | |
| | | | 2> if UL-SCH resources are available for a new transmission and if the UL-SCH resources can accommodate the Enhanced BFR MAC CE plus its subheader as a result of LCP: | |
| | | | | 3> instruct the Multiplexing and Assembly procedure to generate the Enhanced BFR MAC CE. |
| | | | 2> else if UL-SCH resources are available for a new transmission and if the UL-SCH resources can accommodate the Truncated Enhanced BFR MAC CE plus its subheader as a result of LCP: | |
| | | | | 3> instruct the Multiplexing and Assembly procedure to generate the Truncated Enhanced BFR MAC CE. |
| | | | 2> else: | |
| | | | | 3> trigger the SR for beam failure recovery of each BFD-RS set for which BFR has been triggered, not cancelled, and for which evaluation of the candidate beams according to the requirements as specified in TS 38.133 [11] has been completed; |
| | | | | 3> trigger the SR for SCell beam failure recovery for each SCell for which BFR has been triggered, not cancelled, and for which evaluation of the candidate beams according to the requirements as specified in TS 38.133 [11] has been completed. |
| All BFRs triggered for an SCell shall be cancelled when a MAC PDU is transmitted and this PDU includes a MAC CE for BFR which contains beam failure information of that SCell. All BFRs triggered for a BFD-RS set | | | | |
| of a Serving Cell shall be cancelled when a MAC PDU is transmitted and this PDU includes an Enhanced BFR MAC CE or Truncated Enhanced BFR MAC CE which contains beam failure recovery information of that BFD-RS set of the Serving Cell. | | | | |

### BFRQ (based on PRACH): New beam identification + PRACH transmission

As described above, if a number of BFIs exceeding a predetermined threshold occurs, the UE determines that a beam failure has occurred and may perform a beam failure recovery operation. As an example of the beam failure recovery operation, a beam failure recovery request (BFRQ) operation based on the RACH procedure (i.e., PRACH) may be performed.

### Beam Failure Recovery (in 3GPP NR Rel-16)

In the Rel-16 NR MIMO work item, standardization was carried out to support BFR for SCells. To accommodate the UE's Beam Failure Recovery reQuest (BFRQ), a (dedicated) PUCCH resource(s) is configured in the SpCell to allow the UE to perform BFRQ for the SCell. In what follows, for the sake of convenience, the PUCCH is referred to as the BFR-PUCCH.p

As described above, the role of the BFR-PRACH standardized in the Rel-15 was to transmit both "the occurrence of a beam failure and new beam RS (set) information" to the base station; meanwhile, the role of the BFR-PUCCH is only to inform of "the occurrence of a beam failure in the SCell," and to report, to a subsequent BFR MAC-CE, in which SCell(s) the beam failure has occurred (e.g., CC index(es)), whether a new beam exists for the corresponding SCell(s), and, if a new beam exists therein, the corresponding beam RS ID (e.g., CSI-RS resource ID, SSB resource ID). The corresponding BFR-PUCCH uses the same PUCCH format as the scheduling request (SR) and may be defined by assigning a specific SR ID for the purpose of BFR. If, when the UE detects a beam failure in the SCell, an UL-SCH pre-allocated from the base station already exists, the UE may omit the BFR-PUCCH transmission procedure and directly transmit the BFR MAC-CE via the pre-allocated UL-SCH, similarly to the SR procedure.

### TRP-specific BFR (in 3GPP NR Rel-17)

The BFR methods for the SpCell and SCell described above have limitations in that the methods are unable to perform beam recovery when only part of TRPs exhibit a beam failure in an environment where multi-TRP-based transmission and reception are conducted on the same BWP/CC. Here, multi-TRP (mTRP) transmission and reception considered supporting both multi-DCI (mDCI) mTRP operation and single DCI (sDCI) mTRP operation, which were standardized in the 3GPP Rel-16 and Rel-17. The BFR method designed specifically to achieve the object above is often referred to as "TRP-specific BFR" for the purpose of convenience. Although the overall procedure of TRP-specific BFR is similar to that of the Rel-16 BFR, several differences exist, as described below. The procedure and characteristics of TRP-specific BFR are summarized in Table 5 below.

**[Table 5]**

| | | | | | |
|---|---|---|---|---|---|
| | • Step1) TRP-specific BFD | | | | |
| | | ▪ BFD RS configuration by base station | | | |
| | | | ◆ Explicit configuration: extend to two BFD RS set | | |
| | | | | • Two BFD RS sets are configured explicitly via RRC or RRC+MAC-CE (cf. legacy BFD supports RRC only) | |
| | | | ◆ Implicit configuration: determined by TCI states (QCL type-D RS(s)) per CORESET pool | | |
| | | | | • Due to the increased number of CORESETs for mTRP, UE reports the max number of BFD RSs per set, and the max number of BFD RSs across two sets via UE capability (cf. legacy specification assumes that all UE can only support up to two BFD RSs per BWP). | |
| | | | | | ▪ In addition, BFD RS selection rule is introduced for when the total number of beams for each CORESET pool exceeds the UE capability. |
| | | ▪ The UE determines BF for each TRP according to the configuration (performs BFI count for each BFD RS set) | | | |
| | | | • Step2) TRP-specific BFRQ when BFD occurs | | |
| | | | | ▪ Configure Scheduling Request (SR) PUCCH resources as the BFRQ resources of the base station | |
| | | | | | ◆ Support both the method of configuring separate SR PUCCH resources for each TRP and the method of sharing the same SR PUCCH resources between two TRPs |
| | | | | ▪ When a specific TRP exhibits a BF, the UE transmits the configured BFRQ SR PUCCH resources | |
| | | | | | ◆ E.g., Transmit the SR PUCCH resources to a non-beam-failure TRP |
| | | | • Step3) BFRQ response from NW(network) | | |
| | | | | ▪ The TRP which has received the BFRQ transmits UL grant DCI to the corresponding UE. | |
| | | | • Step4) BFR MAC-CE transmission at UE | | |
| | | | | ▪ The UE transmits the BFR MAC-CE through the PUSCH allocated by the Step3 message | |
| | | | | ▪ Deliver failed BFD RS set ID to the BFR MAC-CE in addition to the existing information defined in the Rel-16 (failed CC ID, new beam found info, and new beam RS ID) | |
| | | | | | ◆ Beam failed CC list |
| | | | | | ◆ Failed BFD RS set(s): first, second, or both |
| | | | | | ◆ Whether new beam is found for each BFD set |
| | | | | | ◆ New beam RS ID for each BFD set (if found) |
| | | | • Step5) MAC-CE response from NW | | |
| | | | | ▪ An operation in which the TRP that has received the BFR MAC-CE notifies the UE via DCI that the message has been successfully received (similar to Rel-16 BFR, using the same DCI as that used for indicating successful PUSCH decoding, with the same HARQ ID and a toggled NDI). | |
| | | | • Step6) Reset to new beam | | |
| | | | | ▪ After receiving the Step 5 DCI, the UE resets the beam (e.g., QCL Type-D, TCI) of the CORESET pool corresponding to the beam-failed TRP to the new beam RS of the corresponding TRP, as reported by the UE, after a predetermined time (e.g., 28 symbols). | |
| The operation above is supported only for the m-DCI mTRP operation. | | | | | |

In the present disclosure, the symbol "/" means "and," "or," or "and/or," depending on the context. The QCL Type-D RS in the present disclosure refers to a QCL reference RS in terms of spatial parameters, i.e., in terms of beam perspective and may be further interpreted as a reference RS for the corresponding parameters or (if newly introduced in the future) other beam/spacerelated parameters. Also, in environments such as low-frequency bands where analog beamforming is not used, indication of QCL Type-D RS may be omitted. In such cases, the QCL Type-D RS in the present disclosure may be interpreted as a QCL reference RS (i.e., if only one reference RS exists in a TCI state, it may refer to the corresponding RS). In the present disclosure, an "RS with a specific cell ID configured" or an "RS related to the specific cell ID" refers to an RS that is used for generating the RS sequence using the corresponding cell ID (e.g., sequence initialization), and/or an RS configured as separate information for the corresponding cell ID (e.g., a neighbor-cell RS for mobility, SSB from a non-serving cell, and so on).

In the present disclosure, TCI refers to a TCI state, and vice versa. For example, unified TCI may refer to a unified TCI state.

In the present disclosure, the unified TCI state may be distinguished based on the serving cell configuration (e.g., unifiedTCI-StateType (separate, joint)). The UE may receive a serving cell configuration (ServingCellConfig) including the unifiedTCI-StateType from the base station.
1) When the unifiedTCI-StateType is set to "separate," the unified TCI state may refer to a DL TCI state/UL TCI state. The DL TCI state is configured by the dl-OrJointTCI-StateList (in PDSCH-Config). The UL TCI state is configured by the ul-TCI-ToAddModList.
2) When the unifiedTCI-StateType is set to "joint," the unified TCI state may refer to a joint TCI state for both UL and DL operations. The joint TCI state is configured by the dl-OrJointTCI-StateList.

In the NR Rel-17, the TRP-specific BFR procedure was standardized, and a unified TCI-based integrated beam management scheme was standardized to improve beam management efficiency for single-beam UEs. Since the Rel-17 unified TCI-based beam management scheme activates/indicates only one beam at a time, it is difficult to use in conjunction with mTRP transmission and reception techniques; therefore, in the Rel-18, standardization work is underway to extend unified TCI-based beam management to support the management of two beams separately for DL and UL.

In the Rel-18, the number of DL TCIs (M value) and the number of UL TCIs (N value) that may be simultaneously activated/indicated/used/updated is expected to increase to two. When M/N = 2, methods in which the base station configures/assigns which DL/UL channel/RS resource follows which of the two TCIs (e.g., m = 0 or 1, n = 0 or 1) are expected to be introduced. For example, when M/N = 2, for semi-statically configured/allocated channels/RSs (e.g., PDCCH, PUCCH), information/parameters may be configured, which indicates i) following both TCIs (e.g., m = {0, 1} for SFN PDCCH, n = {0, 1} for simultaneous multi-panel transmission for PUCCH), ii) following one of the two TCIs (e.g., m = 0 or 1, n = 0 or 1), or iii) following neither of the two TCIs (e.g., no m/n value configured). The corresponding information/parameters may be configured via RRC in units of resources or resource sets (e.g., CORESET).

When unified TCI is indicated/updated (e.g., via MAC-CE and/or DCI), the TCI corresponding to m/n = 0 and/or m/n = 1 is indicated/updated, and the TCIs of the channels/RSs configured with the corresponding m/n values are also indicated/updated accordingly. With the introduction of the m/n = 2 unified TCI scheme, it may become possible to support TRP-specific BFR, which was not supported with the conventional m/n = 1 unified TCI scheme. The present disclosure proposes a method for supporting the scheme more efficiently.

The BFD procedure is classified into an explicit BFD RS configuration method and an implicit BFD RS configuration method.

According to the implicit BFD RS configuration method, the UE determines the beam RS (e.g., TCI, QCL Type-D RS) of the PDCCH as the BFD RS. According to the explicit BFD RS configuration method, BFD RSs are designated/configured by the base station to the UE (separately from the beam RS of the PDCCH).

According to the Rel-17 TRP-specific BFD, two BFD RS sets are configured/determined.

In the explicit BFD RS configuration method, BFD RSs belonging to the two BFD RS sets are configured based on RRC or RRC + MAC-CE.

The implicit BFD configuration method is supported in mDCI M-TRP transmission. Specifically, the UE determines the configuration so that the same RS(s) as the TCI/QCL RS(s) of the CORESETs belonging to each CORESET pool is included in each BFD RS set.

In the case of M = 2 unified TCI, it is mainly assumed that each TCI is indicated/updated by a different TRP. Based on each TCI, each BFD RS set may be configured.

Based on the DL/joint TCI for m = 0, BFD RS set #0 (e.g., first BFD-RS set) may be determined. Specifically, it may be determined so that the same RS as the QCL type-D RS indicated/referenced by the DL/joint TCI for m = 0 is included in the BFD RS set #0 (e.g., first BFD-RS set).

Based on the DL/joint TCI for m = 1, BFD RS set #1 (e.g., second BFD-RS set) may be determined. Specifically, it may be determined so that the same RS as the QCL type-D RS indicated/referenced by the DL/joint TCI for m = 1 is included in the BFD RS set #1 (e.g., second BFD-RS set).

In one example, the m value and the BFD RS set ID may be mapped according to a specific rule (e.g., the first TCI is mapped to BFD RS set #0, and the second TCI is mapped to BFD RS set #1).

In one example, the base station may configure/indicate the mapping relationship between the m value and the BFD RS set ID to the UE. In particular, in a case where an update method using the same beam/TCI is applied for a plurality of CCs (e.g., simultaneousTCI-UpdateList1, simultaneousTCI-UpdateList2), the following operations may be considered.

Configuration may be performed in consideration of a case in which one CC belonging to the corresponding CC group (serving cell group) operates with TRP #0 as the serving TRP and another CC operates with TRP #1 as the serving TRP. In other words, the m value may be configured/assigned for each CC/BWP. Accordingly, cell-specific BFR may be performed for one CC/BWP, while TRP-specific BFR may be performed for another CC/BWP. The following illustrates one embodiment. In the present disclosure, since a Component Carrier (CC) corresponds to a serving cell, a CC may be identified by a serving cell index. In other words, a list of CCs for simultaneous update of TCI states may be a list including serving cell indexes.

Embodiment (multi-CC TCI update with CC#0, CC#1, CC#2 and CC#3)
[1] CC#0 (M = 2) -> TRP-specific BFD where BFD RS set#0 includes m = 0 TCI and BFD RS set#1 includes m = 1 TCI
[2] CC#1 (M = 1 with m = 0) -> cell-specific BFD where BFD RS set includes m=0 TCI
[3] CC#2 (M = 1 with m = 1) -> cell-specific BFD where BFD RS set includes m=1 TCI
[4] CC#3 (M=2) -> TRP-specific BFD where BFD RS set#0 includes m = 0 TCI and BFD RS set#1 includes m = 1 TCI

In the present disclosure, m = 0 TCI may correspond to the first TCI between the two indicated unified TCIs, and m = 1 TCI may correspond to the second TCI between the two indicated unified TCIs.

The example above illustrates a method in which the BFD-RS set ID is determined based on the m value.

If the mapping between the m value and the BFD-RS set ID is configured/indicated by the base station, a case in which set #0 is mapped to the m = 1 TCI and set #1 is mapped to the m = 0 TCI in CC #0 and CC #3 may also be supported.

Technical Issue #1: In CC(s)/BWP(s) operating with M = 2 unified TCI, there may exist a CORESET that is not mapped to any m value. The beam/TCI of such a CORESET is indicated separately from the unified TCI, according to a legacy method (e.g., Rel-15/16 CORESET TCI indication via RRC or RRC + MAC-CE). In the case where CORESET(s) configured to follow the unified TCI and CORESET(s) configured not to follow the unified TCI are mixed, a method for constructing a BFD RS set has to be defined.

### Method 1

When CORESET(s) configured to follow the unified TCI and CORESET(s) configured not to follow the unified TCI are mixed, a TRP-specific BFD RS set may be determined based on at least one of the following methods.

Each BFD RS set may include i) one of the m = 0 TCI or m = 1 TCI, or ii) a specific RS (e.g., a QCL Type-D RS of the corresponding TCI state) corresponding to one of the m = 0 TCI or m = 1 TCI. At this time, one of the following methods may additionally be applied.

Method 1-1) (In the case of mDCI M-TRP) if there exists a CORESET to which unified TCI is not applied within the CORESET pool related to the corresponding m value, the TCI (or QCL Type-D) RS of the corresponding CORESET may be included in the corresponding BFD RS set.

Method 1-2) For CORESET(s) to which the unified TCI is not applied, the base station may indicate/configure the UE to include TCI (or QCL Type-D) RS of a specific CORESET in the corresponding BFD RS set.

Method 1-3) The base station may indicate/configure the UE to include a specific RS in the corresponding BFD RS set.

Method 1-1 is a method for determining a BFD RS set to which a given RS belongs, based on a specific rule (e.g., the m value related to the CORESET pool ID of the corresponding CORESET). Method 1-2 is a method in which the base station (additionally) configures/indicates the BFD RS set ID of a specific BFD RS set to which a given RS belongs, for CORESETs not subject to unified TCI. Method 1-3 is a method, similar to the explicit BFD RS configuration method, in which the base station configures/indicates RSs to be included in each BFD RS set in addition to the m = 0 TCI or m = 1 TCI.

Example of Method 1-2: The base station may configure to the UE the mapping relationship between the BFD RS set ID and a pair {m value, CORESET ID}. In this case, each BFD RS set may be configured/determined based on both the TCI corresponding to the m value and the TCI of the corresponding CORESET ID. In other words, each BFD RS set may be determined based on the RS referenced/indicated by the TCI corresponding to the m value and the RS referenced/indicated by the TCI of the corresponding CORESET ID.

Example of Method 1-3: The base station may configure the mapping relationship between the BFD RS set ID and a pair {m value, CSI-RS ID}. In this case, each BFD RS set may be configured/determined based on both the TCI corresponding to the m value and the CSI-RS. In other words, each BFD RS set may be determined based on the RS referenced/indicated by the TCI corresponding to the m value and the RS based on the CSI-RS.

In applying the methods above, the maximum number of BFD RSs that may be included in each BFD RS set and/or in all BFD RS sets (of each CC/BWP) may be defined/configured (based on a related UE capability value). If the number of RSs to be included in each BFD RS set or across all BFD RS sets exceeds the aforementioned limit (i.e., the maximum number of BFD RSs), a BFD RS selection rule may be applied (as defined in or similarly to the Rel-17 BFR). The conventional operations related to the description above are illustrated in Table 6 below.

**[Table 6]**

| |
|---|
| A UE can be provided, for each BWP of a serving cell, a set *q̅₀* of periodic CSI-RS resource configuration indexes by *failureDetectionResourcesToAddModList* and a set *q̅₁* of periodic CSI-RS resource configuration indexes and/or SS/PBCH block indexes by *candidateBeamRSList* or *candidateBeamRSListExt* or *candidateBeamRSSCellList* for radio link quality measurements on the BWP of the serving cell. Instead of the sets *q̅₀* and *q̅₁*, for each BWP of a serving cell, the UE can be provided respective two sets *q̅_{0,0}* and *q̅_{0,1}* of periodic CSI-RS resource configuration indexes by *failureDetectionSetl* and *failureDetectionSet2* that can be activated by a MAC CE [11 TS 38.321] and corresponding two sets *q̅_{1,0}* and *q̅_{1,1}* of periodic CSI-RS resource configuration indexes and/or SS/PBCH block indexes by *candidateBeamRS-List* and *candidateBeamRS-List2,* respectively, for radio link quality measurements on the BWP of the serving cell. |
| The set *q̅_{0,0}* is associated with the set *q̅_{1,0}* and the set *q̅_{0,1}* is associated with the set *q̅_{1,1}.* |
| If the UE is not provided *q̅*₀ by failureDetectionResourcesToAddModList for a BWP of the serving cell, the UE determines the set *q̅*₀ to include periodic CSI-RS resource configuration indexes with same values as the RS indexes in the RS sets indicated by TCI-State for respective CORESETs that the UE uses for monitoring PDCCH. If the UE is not provided *q̅*_{0,0} and *q̅*_{0,1} for a BWP of the serving cell, the UE determines the set q̅_{0,0} and *q̅*_{0,1} to include periodic CSI-RS resource configuration indexes with same values as the RS indexes in the RS sets indicated by TCI-State for first and second CORESETs that the UE uses for monitoring PDCCH, respectively, where the UE is provided two coresetPoolIndex values 0 and 1 for the first and second CORESETs, or is not provided coresetPoolIndex value for the first CORESETs and is provided coresetPoolIndex value of 1 for the second CORESETs, respectively. If there are two RS indexes in a TCI state, the set *q̅*₀ or *q̅*_{0,0}, or *q̅*_{0,1} includes RS indexes configured with qcl-Type set to 'typeD' for the corresponding TCI states. If a CORESET that the UE uses for monitoring PDCCH includes two TCI states and the UE is provided sfnSchemePdcch set to 'sfnSchemeA' or 'sfnSchemeB', the set *q̅*₀ includes RS indexes in the RS sets associated with the two TCI states. |
| The UE expects the set *q̅*₀ to include up to two RS indexes. If the UE is provided q̅_{0,0} or *q̅*_{0,1}, the UE expects the set q̅_{0,0} or the set *q̅*_{0,1} to include up to a number of *N*_{BFD} RS indexes indicated by maxBFD-RS-resourcesPerSetPerBWP. If the UE is not provided *q̅*_{0,0} or *q̅*_{0,1}, and if a number of active TCI states for PDCCH receptions in the first or second CORESETs is larger than *N*_{BFD}, the UE determines the set*q̅*_{0,0} or *q̅*_{0,1} to include periodic CSI-RS resource configuration indexes with same values as the RS indexes in the RS sets associated with the active TCI states for PDCCH receptions in the first or second CORESETs corresponding to search space sets according to an ascending order for PDCCH monitoring periodicity. If more than one first or second CORESETs correspond to search space sets with same monitoring periodicity. the UE determines the order of the first or second CORESETs according to a descending order of a CORESET index. |

According to the rule above, the RSs to be included in each BFD RS set may be determined as follows. i) A CORESET that includes a search space set with a shorter monitoring periodicity (e.g., an RS based on the TCI state related to the corresponding CORESET) may be selected first. ii) If the monitoring periodicities are the same, a CORESET (e.g., an RS based on the TCI state related to the corresponding CORESET) may be selected in descending order of CORESET ID.

At this time, the following technical issues should be considered (for Method 1-1 and Method 1-2).

(Issue #2): When CORESETs to which unified TCI is applied and CORESETs to which unified TCI is not applied are mixed, ambiguity may arise as to which CORESET should be used as the reference for the monitoring periodicity. For example, it may be assumed that CORESET ID #0 and ID #2 follow the unified TCI, whereas CORESET ID #1 does not follow the unified TCI. In this case, it may be unclear whether the minimum monitoring periodicity of CORESET ID #1 should be compared with that of CORESET ID #0 or CORESET ID #2. In other words, it may be ambiguous whether the ascending order for PDCCH monitoring periodicity in Table 6 should be based on CORESET(s) to which unified TCI is applied or on CORESET(s) to which unified TCI is not applied.

(Issue #3): The order of CORESET IDs between CORESETs to which unified TCI is applied and those to which unified TCI is not applied may be ambiguous. For example, if CORESET ID #0 and CORESET ID #2 follow the unified TCI, while CORESET ID #1 does not follow the unified TCI, it may be unclear which RS should be selected first. In other words, it may be ambiguous whether the descending order of a CORESET index in Table 6 is based on CORESET(s) to which the unified TCI is applied or CORESET(s) to which unified TCI is not applied.

The following method may be considered with respect to Issue #2.

### Method 2

In applying the proposed methods (e.g., Method 1-1, Method 1-2), if the number of RSs to be included in each BFD RS set or in the entire BFD RS sets exceeds a predetermined limit, the TCI related to the CORESET that includes the search space set with the shortest monitoring periodicity may be preferentially included (as in the existing rule).

At this time, for the CORESET(s) that follow the unified TCI, the minimum monitoring periodicity among the search space sets of all the CORESET(s) is compared with the monitoring periodicity of each search space set of the CORESET(s) that does not follow the unified TCI.

In other words, the ascending order for the monitoring periodicity may be determined based on i) the minimum monitoring periodicity among the search space sets of CORESET(s) that follow the unified TCI, and ii) the monitoring periodicity of each search space set of the CORESET(s) that do not follow the unified TCI.

### Embodiment)

CORESET ID#0 with minimum monitoring periodicity 2 slots
CORESET ID#1 with minimum monitoring periodicity 3 slots
CORESET ID#2 with minimum monitoring periodicity 4 slots

It may be assumed that CORESET ID #0 and CORESET ID #2 follow the unified TCI, while CORESET ID #1 does not follow the unified TCI. The minimum monitoring periodicity for the two CORESETs following the unified TCI is 2 slots. The minimum monitoring periodicity for CORESET ID #1 is 3 slots. Since the minimum monitoring periodicity (2 slots) of the two CORESETs following the unified TCI is shorter than the minimum monitoring periodicity (3 slots) of CORESET ID #1 that does not follow the unified TCI, the unified TCI (e.g., RS referenced/indicated by the unified TCI) may be preferentially selected/included as a BFD RS.

In addition to or as an alternative to the proposed Method 2, the following method may be considered to address Issue #2 and/or Issue #3.

### Method 3

In applying the proposed methods (e.g., Method 1-1, Method 1-2), if the number of RSs to be included in each BFD RS set or in the entire BFD RS sets exceeds a predetermined limit, the BFD RS set may be determined based on i), ii), or iii) shown below.
i) RSs indicated/configured by the unified TCI may be preferentially included in the BFD RS set over RSs related to CORESETs to which the unified TCI is not applied.
ii) RSs related to CORESETs to which the unified TCI is not applied may be preferentially included in the BFD RS set over RSs indicated/configured by the unified TCI.
iii) The base station may configure/indicate to the UE which type of RS is to be preferentially included in the BFD RS set. In other words, the RSs to be preferentially included in the BFD RS set ( i) RSs indicated/configured by the unified TCI, or ii) RSs related to CORESETs to which the unified TCI is not applied) may be configured/indicated to the UE.

In general, when unified TCI is configured and operating, the RS indicated/configured by the unified TCI is more likely to play an important role as a serving beam. Based on the feature above, it may be specified that the beam related to the unified TCI is preferentially included in the BFD RS set. Alternatively, considering flexibility of beam indication/configuration, the base station may configure the UE as to which type of RS is to be preferentially included in the BFD RS set.

Method 3 may be applied in conjunction with Method 2. For example, BFD RSs may be preferentially selected based on the monitoring periodicity, and if the minimum monitoring periodicities are the same, the BFD RSs to be preferentially included may be selected/determined based on Method 3.

To address Issue #2 and Issue #3, a method may be considered, in which the base station/NW performs scheduling/implementation so that the number of BFD RSs does not exceed the specified limit. Alternatively, to prevent the occurrence of Issue #2, a method of restricting the configuration of the base station as described below may be considered.

### Method 4

In a CC/BWP where (M = 2 or more) unified TCI (and (TRP-specific) BFR) are configured, the UE does not expect to encounter the following cases.

Method 4-1) The UE does not expect to encounter any CORESET that does not follow the unified TCI.

Method 4-2) The UE does not expect to encounter a case in which a CORESET to which the unified TCI is not applied exists and, at the same time, the number of BFD RSs (for each BFD RS set) exceeds a predetermined limit.

Method 4-1 is a method to prevent the coexistence of CORESETs to which the unified TCI is applied and CORESETs to which the unified TCI is not applied within the same BWP.

Method 4-2 is a method that allows the configuration of CORESETs to which the unified TCI is not applied but prevents Issue #2 from occurring by having the base station/NW configure/implement the total number of CORESETs and/or the total number of TCIs for the CORESETs not to exceed a predetermined limit (if such a case occurs, the UE may regard it as an error case).

Methods 2, 3, and 4 may be applied to the case where CORESETs to which the unified TCI is applied and CORESETs to which the unified TCI is not applied are mixed when not only TRP-specific BFD but also to Rel-15/16 cell-specific BFD (or TRP-common BFD) is performed.

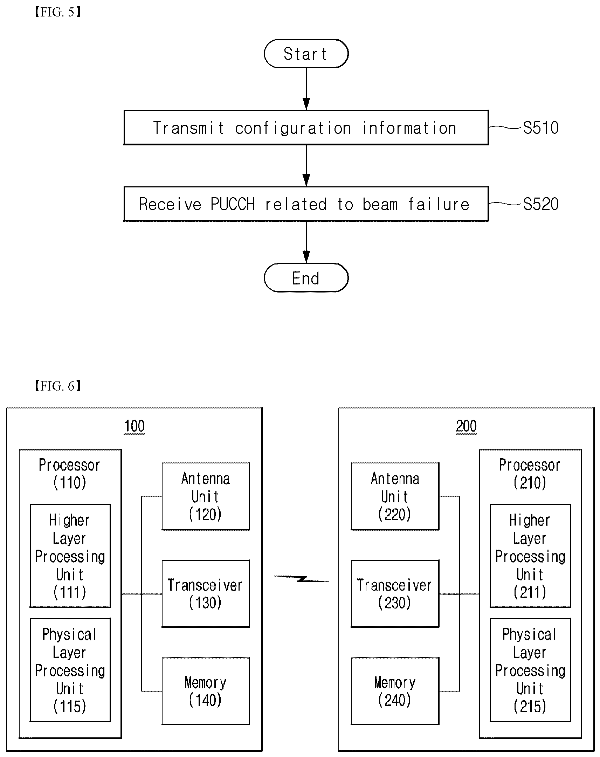

From an implementation point of view, the operations of the base station/UE according to the embodiments above (e.g., operations based on at least one of Methods 1 to 4) may be processed by the apparatus of FIG. 6 (e.g., the processor 110 or 210 of FIG. 6) to be described later.

Also, the operations of the base station/UE according to the embodiments (e.g., operations based on at least one of Methods 1 to 4) may be stored in the memory (e.g., 140 or 240 of FIG. 6) in the form of commands/programs (e.g., instruction or executable code) for driving at least one processor (e.g., 110 or 210 of FIG. 6).

In what follows, a signaling procedure based on the embodiments above will be examined.

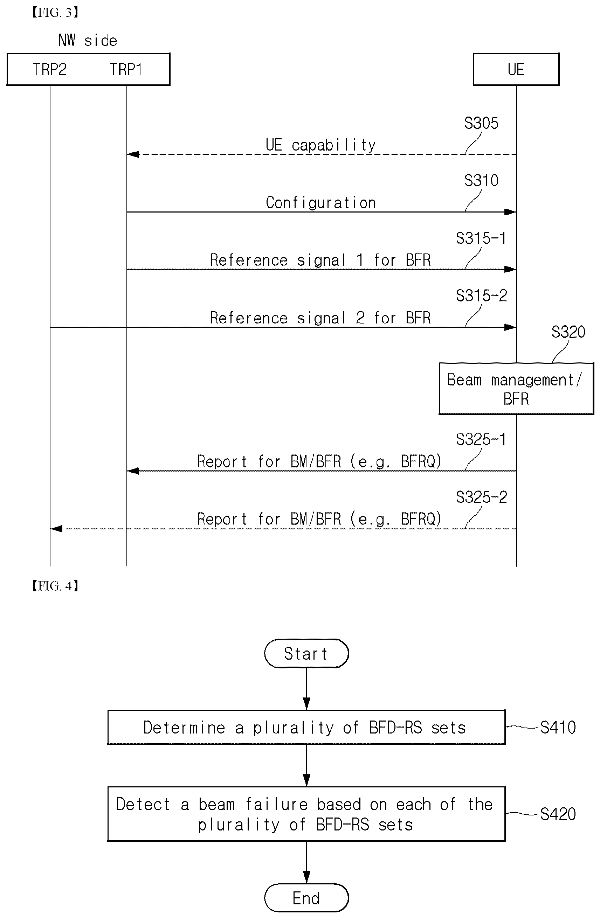

FIG. 3 illustrates a signaling procedure according to an embodiment of the present disclosure.

FIG. 3 illustrates signaling between the network side (e.g., TRP 1, TRP 2) and the UE in a Multiple TRP (i.e., M-TR or multiple cells, in what follows, all TRPs may be replaced by cells) situation to which the methods proposed in the present disclosure (e.g., Method 1/Method 1-1/Method 1-2) may be applied. Here, the UE/network side is merely an example and may be replaced by various types of devices. FIG. 3 is provided merely for the convenience of description and does not limit the technical scope of the present disclosure. Also, part of the steps shown in FIG. 3 may be omitted depending on the situation and/or configuration.

Referring to FIG. 3, for the convenience of description, signaling between two TRPs and a UE is considered; however, it is apparent that the signaling scheme may be extended and applied to signaling between multiple TRPs and multiple UEs. In what follows, the network side may refer to a single base station that includes a plurality of TRPs or to a single cell that includes a plurality of TRPs. For example, an ideal/non-ideal backhaul may be established between TRP 1 and TRP 2 constituting the network side. Although the description below is based on a plurality of TRPs, the description may equally be extended and applied to transmissions through a plurality of panels. Furthermore, in the present disclosure, the UE's operation of receiving a signal from TRP 1 or TRP 2 may also be interpreted/described as the UE's operation of receiving a signal from the network side (via or through TRP 1/2), and the UE's operation of transmitting a signal to TRP 1 or TRP 2 may be interpreted/described as the UE's operation of transmitting a signal to the network side (via or through TRP 1/2); the reverse interpretation/description may also apply.

The base station may be a generic term referring to an object that performs transmission and reception of data to and from the UE. For example, the base station may be a concept that includes one or more Transmission Points (TPs) and one or more Transmission and Reception Points (TRPs). Also, a TP and/or TRP may include a panel or transmission and reception unit of the base station. Also, the term "TRP" may be replaced with terms such as a panel, an antenna array, a cell (e.g., macro cell/small cell/pico cell), a transmission point (TP), or a base station (e.g., gNB). As described above, a TRP may be distinguished based on information (e.g., index or ID) related to a CORESET group (or CORESET pool). For example, when a UE is configured to perform transmission and reception with a plurality of TRPs (or cells), it may indicate that a plurality of CORESET groups (or CORESET pools) are configured for a single UE. Such configuration of CORESET groups (or CORESET pools) may be performed through higher layer signaling (e.g., RRC signaling).

Specifically, FIG. 3 illustrates signaling in the M-TRP (or cell; in what follows, all TRPs may be replaced with cells, or a case in which a plurality of CORESETs are configured from a single TRP may also be regarded as M-TRP) situation.

The UE may report UE capability information to the network S305. The UE capability information may include information related to the maximum number of BFD RSs supported by the UE (per BFD RS set).

The UE may receive configuration information related to Multiple TRP-based transmission and reception from the network via and/or through TRP 1 (and/or TRP 2) S310. The configuration information may include information related to the configuration of the network side (i.e., TRP configuration) and resource allocation information related to Multiple TRP-based transmission and reception. At this time, the configuration information may be delivered via higher layer signaling (e.g., RRC signaling or MAC-CE). Also, if the configuration information is pre-defined or pre-configured, the corresponding step may be omitted.

For example, the configuration information may include unified TCI-related configuration information, BFR-related configuration information, and CORESET-related configuration information, as described in the methods above (e.g., Method 1/Method 2/Method 3/Method 4). For example, the configuration information may include information related to beam management/BFR, as described in the methods above.

The UE may receive reference signal (RS) 1 for beam management/BFD from the network side via/through TRP 1 S315-1. Also, the UE may receive RS 2 for beam management/BFD or for searching for a new beam from the network side via/through TRP 2 S315-2. For example, RS 1/RS 2 for the beam management/BFD/new beam may be SSB/CSI-RS. Also, the S315-1 and S315-2 steps may be performed simultaneously, or one may be performed earlier than the other.

The UE may perform beam management/BFR based on the RS 1 and/or RS 2 received from the network side via/through TRP 1 (and/or TRP 2) S320. The beam management/BFR operation may be performed based on the beam management/beam failure recovery/TRP-specific BFR. For example, the UE may measure/estimate a hypothetical BLER based on the reception quality of the RS 1 and/or the RS 2 and determine the occurrence of a BF according to the measurement/estimation result.

The UE may transmit a report related to the beam management/BFR (e.g., BFRQ or BFR MAC-CE) to the network side via/through TRP 1 and/or TRP 2 S325-1, S325-2. In this case, the report related to the beam management/BFR for TRP 1 (e.g., BFRQ or BFR MAC-CE) and the report related to the beam management/BFR for TRP 2 (e.g., BFRQ or BFR MAC-CE) may be transmitted separately or may be combined into a single report. Also, the UE may be configured to transmit a report related to beam management/BFR (e.g., BFRQ) to a representative TRP (e.g., TRP 1) and omit the transmission of a report related to the beam management/BFR (e.g., BFRQ) to the other TRP (e.g., TRP 2). Alternatively, the UE may be configured to transmit a BFR-related report (e.g., BFRQ) to the same TRP in which a beam failure occurred. Alternatively, the UE may be configured to transmit a BFR-related report (e.g., BFRQ) to a TRP other than the TRP in which the beam failure occurred. The reporting procedure related to the beam management/BFR may be divided into sub-procedures, such as the BFRQ reporting procedure of the UE, the response procedure to the BFRQ by the base station, and the detailed BFR information reporting procedure (e.g., BFR MAC-CE) by the UE.

For example, the reporting related to the beam management/BFR (e.g., BFRQ) may be performed based on the proposed methods described above. For example, the occurrence of a beam failure for a specific TRP may be determined and reported by configuring a related BFD RS set based on the proposed method.

For example, upon receiving a report/BFRQ related to a beam failure from the UE via/through TRP 1 and/or TRP 2, the network side may transmit new BM/BFR-related RS information for beam recovery.

For example, the operations of the S305 to S325-2 steps performed by the UE (200 in FIG. 6)/the network side (100 in FIG. 6) may be implemented by the apparatus of FIG. 6. For example, one or more processors 110, 210 may control one or more transceivers 130, 230 and/or one or more memories 140, 240 to perform the operations of the S305 to S325-2 steps.

Although not shown in FIG. 3, after the S325-1/S325-2 step, the base station may transmit a response message to the UE in response to the beam management/BFR reporting (e.g., BFRQ or BFR MAC-CE) from the UE. Upon receiving the corresponding message, the UE may perform a beam resetting procedure for the corresponding TRP(s) after a predetermined time period.

Although not shown in FIG. 3, in the case of m-DCI mTRP operation, the UE may receive DCI 1 and Data 1 scheduled by DCI 1 from the network side via/through TRP 1 (based on the beam determined through the procedure described above). Also, the UE may receive DCI 2 and Data 2 scheduled by DCI 2 from the network side via/through TRP 2. The DCI (e.g., DCI 1, DCI 2) and Data (e.g., Data 1, Data 2) may be delivered via the respective control channels (e.g., PDCCH) and the respective data channels (e.g., PDSCH). For example, the DCI 1 may be received based on a first CORESET with coresetPoolindex set to 0 or not configured, and DCI 2 may be received based on a second CORESET with coresetPoolindex set to 1. For example, the DCI (e.g., DCI 1, DCI 2) and/or Data (e.g., Data 1, Data 2) may include control information/data related to the operations described in the proposed methods (e.g., Method 1/Method 1-1).

As mentioned above, the network side/UE signaling and operations described above (e.g., Method 1/Method 1-1/FIG. 3) may be implemented by the apparatus described below. For example, the network side (e.g., TRP 1/TRP 2) may correspond to a first wireless device, and the UE may correspond to a second wireless device; depending on the situation, the opposite configuration may also be considered.

For example, the network side/UE signaling and operations (e.g., Method 1/Method 1-1/FIG. 3) may be processed by one or more processors 110, 210 of FIG. 6. The network side/UE signaling and operations may also be stored in a memory 140, 240 in the form of commands/programs (e.g., instructions or executable code) for driving the one or more processors 110, 210 of FIG. 6.

In what follows, the embodiments will be described in detail with reference to FIGS. 4 and 5 from the perspectives of operations of the UE and the base station. The following methods are distinguished from one another for the convenience of description, and it is to be understood that a portion of one method may be replaced with or combined with a portion of another method.

FIG. 4 is a flow diagram illustrating a method performed by a terminal according to one embodiment of the present disclosure.

Referring to FIG. 4, a method performed by a UE according to one embodiment of the present disclosure includes determining a plurality of BFD-RS sets S410 and detecting a beam failure based on each of the plurality of BFD-RS sets S420.

In the S410 step, the UE determines a plurality of Beam Failure Detection-Reference Signal (BFD-RS) sets.

The plurality of BFD-RS sets may include two BFD-RS sets (e.g., *q̅*_{0,0}, *q̅*_{0,1} of Table 6).

For example, the two BFD-RS sets may include i) a BFD-RS set configured based on higher-layer signaling and ii) a BFD-RS set determined by the UE. In other words, if only the first BFD-RS set (e.g., q̅_{0,0} in Table 6) or the second BFD-RS set (e.g., *q̅*_{0,1} in Table 6) is configured based on higher-layer signaling, the UE may determine the second BFD-RS set or the first BFD-RS set, respectively.

In another example, the two BFD-RS sets may be determined by the UE. In other words, if the first/second BFD-RS set is not configured, the UE may determine the first/second BFD-RS sets.

Each BFD-RS set may include RS indexes based on the CORESETs related to one of a plurality of CORESET pool indexes.

The RS indexes may be determined based on at least one of i) a unified TCI state related to the CORESETs among a plurality of unified TCI states, ii) a TCI state related to a specific CORESET among the CORESETs, and/or iii) an RS mapped to a BFD-RS set ID. The present embodiment may be based on at least one of Methods 1 to 4. Here, each RS index may be based on a CSI-RS resource index or an SSB index. Each RS index may be based on a QCL RS related to type-D or an RS related to a spatial reception filter. For example, an RS index determined based on a (unified) TCI state may be an RS index with the QCL type set to type-D. Specifically, referring to Table 1, a TCI state may include qcl-Type1 and qcl-Type2. Each of qcl-Type1 and qcl-Type2 includes information on the RS index for quasi co-location (QCL) (i.e., referenceSignal (CSI-RS or SSB)). Among the RS indexes based on qcl-Type1 and qcl-Type2, the RS index included in the BFD-RS set may be an RS index with the QCL type set to type-D (e.g., a CSI-RS resource index or an SSB index). Specifically, the specific CORESET(s) may be determined based on at least one of i) whether the unified TCI state is applied, ii) the a Physical Downlink Control Channel (PDCCH) monitoring periodicity, and/or iii) the CORESET index.

According to one embodiment, the TCI state related to the specific CORESET may be a TCI state of a CORESET to which the unified TCI state is not applied. The present embodiment may be based on Method 1-1.

According to one embodiment, the TCI state related to the specific CORESET may be a TCI state configured for a CORESET to which the unified TCI state is not applied. The present embodiment may be based on Method 1-2.

According to one embodiment, the RS mapped to the BFD-RS set ID may be based on an RS mapped to an index (e.g., m) related to the unified TCI state. The present embodiment may be based on Method 1-3.

In one example, the unified TCI state related to the CORESETs may be a unified TCI state applied to the CORESETs. For example, the unified TCI state related to the CORESETs may be a unified TCI state activated for a CORESET pool index related to the CORESETs.

According to one embodiment, the specific CORESET may include at least one CORESET determined based on an ascending order of the PDCCH monitoring periodicity. The ascending order may be determined based on i) the minimum PDCCH monitoring periodicity based on all CORESETs to which the unified TCI state is applied among the CORESETs and ii) the PDCCH monitoring periodicity based on each of one or more CORESETs to which the unified TCI state is not applied among the CORESETs. The present embodiment may be based on Method 2.

According to one embodiment, the specific CORESET may include at least one CORESET determined based on the descending order of the CORESET index for the same PDCCH monitoring periodicity. The descending order may be determined based on i) CORESETs to which the unified TCI state is applied among the CORESETs or ii) one or more CORESETs to which the unified TCI state is not applied among the CORESETs. The present embodiment may be based on Method 3.

According to one embodiment, the CORESETs may be configured to include only the CORESETs to which the unified TCI state is applied. The present embodiment may be based on Method 4-1. In this case, the RS indexes may be determined based on the unified TCI state.

According to one embodiment, based on the inclusion of one or more CORESETs to which the unified TCI state is not applied into the CORESETs, the number of active TCI states based on the CORESETs may be less than or equal to an indicated number of RS indexes per BFD-RS set (e.g., the number of RS indexes indicated by a higher-layer parameter such as maxBFD-RS-resourcesPerSetPerBWP). The present embodiment may be based on Method 4-2. In this case, the RS indexes may be determined based on Methods 1-1 to 1-3 described above.

In the S420 step, the UE detects a beam failure based on each of the plurality of BFD-RS sets.

The detection of the beam failure may be performed based on Table 4 and the description of TRP-specific BFR (Table *5).*

The method may further include a step of receiving configuration information. In the step of receiving configuration information, the UE receives configuration information from the base station. The configuration information may include information related to the configuration of the BFD-RS set (e.g., failureDetectionSet1 and/or failureDetectionSet2).

The method may further include a step of transmitting PUCCH. In the PUCCH transmission step, the UE transmits to the base station a Physical Uplink Control Channel (PUCCH) related to the detection of the beam failure. For example, the PUCCH may be transmitted based on a Scheduling Request (SR) configuration for Beam Failure Recovery (BFR).

The operations based on the S410 step, the S420 step, the configuration information reception step, and the PUCCH transmission step may be implemented by the apparatus of FIG. 6. For example, the UE 200 may control one or more transceivers 230 and/or one or more memories 240 to perform the operations based on the S410 step, the S420 step, the configuration information reception step, and the PUCCH transmission step.

In what follows, the embodiments will be described in detail from the perspective of the base station operation.

The S510 and S520 steps described later correspond to the S410, S420, configuration information reception, and PUCCH transmission steps described in FIG. 4. In consideration of the correspondence relationship, overlapping descriptions will be omitted. In other words, detailed descriptions of the base station operation described later may be replaced with the descriptions/embodiments of FIG. 4 describing the corresponding operations.

FIG. 5 is a flow diagram illustrating a method performed by a base station according to another embodiment of the present disclosure.

Referring to FIG. 5, a method performed by a base station according to another embodiment of the present disclosure may include a step of transmitting configuration information S510 and a step of receiving a Physical Uplink Control Channel (PUCCH) related to beam failure S520. The S510 step may be omitted from the method.

In the S510 step, the base station transmits configuration information to the UE. The configuration information may include information related to the configuration of BFD-RS sets (e.g., failureDetectionSet1 and/or failureDetectionSet2).

In the S520 step, the base station receives a Physical Uplink Control Channel (PUCCH) related to the detection of a beam failure from the UE. The beam failure may be detected based on each of a plurality of BFD-RS sets.

Each BFD-RS set may include RS indexes based on CORESETs related to one of a plurality of CORESET pool indexes.

The RS indexes may be determined based on at least one of i) a unified TCI state among a plurality of unified TCI states related to the CORESETs, ii) a TCI state related to a specific CORESET among the CORESETs, and/or iii) an RS mapped to a BFD-RS set ID.

The operations based on the S510 to S520 steps described above may be implemented by the apparatus of FIG. 6. For example, the base station 100 may control one or more transceivers 130 and/or one or more memories 140 to perform the operations based on the S510 to S520 steps.

A device to which an embodiment of the present disclosure is applicable (a device implementing the method/operation according to an embodiment of the present disclosure) is described below with reference to FIG. 6.

FIG. 6 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 200 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1. A method performed by a UE in a wireless communication system, the method comprising:
determining a plurality of Beam Failure Detection (BFD)-Reference Signal (RS) sets; and
determining a beam failure based on each of the plurality of BFD-RS sets,
wherein each BFD-RS set includes RS indexes based on Control REsource SETs (CORESETs) related to one of a plurality of CORESET pool indexes, and
wherein the RS indexes are determined based on at least one of i) a unified Transmission Configuration Indicator (TCI) state related to the CORESETs from among a plurality of unified TCI states, ii) a TCI state related to a specific CORESET from among the CORESETs, and/or iii) an RS mapped to a BFD-RS set ID.

2. The method of claim 1, wherein the specific CORESET is determined based on at least one of i) whether the unified TCI state is applied, ii) a Physical Downlink Control Channel (PDCCH) monitoring periodicity, and/or iii) the CORESET index.

3. The method of claim 2, wherein the TCI state related to the specific CORESET is the TCI state of a CORESET to which the unified TCI state is not applied.

4. The method of claim 2, wherein the TCI state related to the specific CORESET is the TCI state of a CORESET configured for a CORESET to which the unified TCI state is not applied.

5. The method of claim 1, wherein the RS mapped to the BFD-RS set ID is based on an RS mapped to an index related to the unified TCI state.

6. The method of claim 2, wherein the specific CORESET includes at least one CORESET determined based on an ascending order of the PDCCH monitoring periodicity.

7. The method of claim 6, wherein the ascending order is determined based on i) a minimum PDCCH monitoring periodicity based on all CORESETs to which the unified TCI state is applied among the CORESETs and ii) a PDCCH monitoring periodicity based on each of one or more CORESETs to which the unified TCI state is not applied among the CORESETs.

8. The method of claim 2, wherein the specific CORESET includes at least one CORESET determined based on a descending order of CORESET indexes for the same PDCCH monitoring periodicity.

9. The method of claim 8, wherein the descending order is determined based on i) the CORESETs to which the unified TCI state is applied among the CORESETs, or ii) one or more CORESETs to which the unified TCI state is not applied among the CORESETs.

10. The method of claim 1, wherein the CORESETs are configured to include only CORESETs to which the unified TCI state is applied.

11. The method of claim 1, wherein, based on the CORESETs including one or more CORESETs to which the unified TCI state is not applied, the number of active TCI states based on the CORESETs is smaller than or equal to an indicated number of RS indexes per BFD-RS set.

12. The method of claim 1, further comprising:
transmitting a Physical Uplink Control Channel (PUCCH) related to the beam failure detection.

13. A user equipment operating in a wireless communication system, the user equipment comprising:
one or more transceivers;
one or more processors; and
one or more memories connected to the one or more processors and storing instructions,
wherein the instructions configure the one or more processors to perform all steps of a method according to any one of claims 1 to 12 based on being executed by the one or more processors.

14. A device comprising:
one or more memories; and
one or more processors operably connected to the one or more memories,
wherein the one or more memories store instructions that configure the one or more processors to perform all steps of a method according to any one of claims 1 to 12 based on being executed by the one or more processors.

15. One or more non-transitory computer readable mediums storing instructions,
wherein the instructions executable by one or more processors configure the one or more processors to perform all steps of a method according to any one of claims 1 to 12.

16. A method performed by a base station in a wireless communication system, the method comprising:
receiving a Physical Uplink Control CHannel (PUCCH) related to detection of a beam failure,
wherein the beam failure is detected based on each of a plurality of Beam Failure Detection (BFD)-Reference Signal (RS) sets,
wherein each BFD-RS set includes RS indexes based on Control REsource SETs (CORESETs) related to one of a plurality of CORESET pool indexes, and
wherein the RS indexes are determined based on at least one of i) a unified Transmission Configuration Indicator (TCI) state related to the CORESETs from among a plurality of unified TCI states, ii) a TCI state related to a specific CORESET from among the CORESETs, and/or iii) an RS mapped to a BFD-RS set ID.

17. A base station operating in a wireless communication system, the base station comprising:
one or more transceivers;
one or more processors; and
one or more memories connected to the one or more processors and storing instructions,
wherein the instructions configure the one or more processors to perform all steps of a method according to claim 16 based on being executed by the one or more processors.
